# EUROPÄISCHE PATENTANMELDUNG

(11) **EP 4 421 013 A1**
(43) Veröffentlichungstag der Anmeldung: **28.08.2024**
(21) Anmeldenummer: 23157747.9
(22) Anmeldetag: 21.02.2023
(51) Int. Cl.: B65H 75/48, H02G 11/00, H02G 11/02, B65H 75/36, H02G 3/04

(54) **KABELSPEICHER**

(71) Anmelder: Agder Tunnelservice AS, 4628 Kristiansand (NO)
(72) Erfinder: Hamre, Kjell Vidar, 4400 Flekkefjord (NO); Löschner, Philipp, 09112 Chemnitz (DE); Tümpner, Michael, 08280 Aue (DE)
(74) Vertreter: Steiniger, Carmen

(57) **Zusammenfassung**

Die vorliegende Erfindung betrifft einen Kabelspeicher mit einem ortsfesten ersten Umlenkrollensystem, einem relativ zu dem ersten Umlenkrollensystem linear verfahrbaren zweiten Umlenkrollensystem und einem Elektrokabel, das um das erste Umlenkrollensystem und das zweite Umlenkrollensystem geschlungen ist. Es ist die Aufgabe der vorliegenden Erfindung, einen Kabelspeicher für einen mobilen Einsatz zur Verfügung zu stellen, der den Aktionsradius einer damit verbundenen Arbeitsvorrichtung erhöht und auch bei rauen Umgebungsbedingungen eine schonende Zuführung des Elektrokabels zur Arbeitsvorrichtung ermöglicht. Die Aufgabe wird erfindungsgemäß durch einen Kabelspeicher mit einem ortsfesten ersten Umlenkrollensystem, einem relativ zu dem ersten Umlenkrollensystem linear verfahrbaren zweiten Umlenkrollensystem und einem Elektrokabel, das um das erste Umlenkrollensystem und das zweite Umlenkrollensystem geschlungen ist, gelöst, wobei der Kabelspeicher einen Mast aufweist, an dem das erste Umlenkrollensystem und das zweite Umlenkrollensystem angeordnet sind, und der Kabelspeicher ein Untergestell und in einer Breitenrichtung des Untergestells ausgerichtete und beidseitig des Mastes ausgebildete Bolzenverbindungsmittel für eine lösbare Verbindung zwischen dem Mast und dem Untergestell aufweist.

## Beschreibung

Die vorliegende Erfindung betrifft einen Kabelspeicher mit einem ortsfesten ersten Umlenkrollensystem, einem relativ zu dem ersten Umlenkrollensystem höhenverfahrbaren zweiten Umlenkrollensystem und einem Elektrokabel, das um das erste Umlenkrollensystem und das zweite Umlenkrollensystem geschlungen ist.

Bei der Stromversorgung einer ortsveränderlichen Arbeitsvorrichtung über ein Elektrokabel besteht das Problem, das abhängig vom Ort der Arbeitsvorrichtung die jeweils benötigte Kabellänge variiert, um den veränderlichen Abstand von einer Spannungsquelle bis zur Arbeitsvorrichtung zu überbrücken. Daher ist es notwendig, eine bestimmte Kabellänge vorzuhalten, die so bemessen ist, dass auch ein Maximalabstand zwischen der Arbeitsvorrichtung und der Spannungsquelle überbrückt werden kann. Der Maximalabstand entspricht der maximalen freien Kabellänge, welche je nach Aufgabenstellung, verwendeter Kabelart und zu versorgender Arbeitsvorrichtung ganz unterschiedlich ausgelegt ist.

Beispielsweise werden viele Haushaltsstaubsauger über ein wenige Millimeter dickes und circa 5 bis 7 Meter langes Elektrokabel mit Strom versorgt, das auf einer Trommel gespeichert ist, von der es abgezogen und über einen Rückholmechanismus wieder aufgewickelt wird.

Sehr viel komplizierter gestaltet sich die Speicherung von Elektrokabeln mit großen, d. h., mit bis zu mehreren Zentimeter starken, Kabelquerschnitten, wie sie zur Stromversorgung leistungsstarker Maschinen, wie beispielsweise Baggern, verwendet werden.

Solche starken Elektrokabel können prinzipiell auch auf einer Trommel gespeichert werden, wobei eine Rückholung des Elektrokabels dann allerdings einen zusätzlichen, motorgestützten Antriebsmechanismus erfordert. Eine zuverlässige Kabelrückholung ist bei Baustellenfahrzeugen dabei besonders wichtig, da die Elektrokabel in der rauen Arbeitsumgebung einem erhöhten Beschädigungsrisiko ausgesetzt sind. Insbesondere muss hier vermieden werden, dass das jeweilige Elektrokabel länger auf dem häufig zerklüfteten Boden schleift.

Aus dem Stand der Technik sind Kabelspeicher bekannt, bei denen das Elektrokabel, ähnlich wie bei einem Flaschenzug, abwechselnd um zwei parallel angeordnete Umlenkrollen geschlungen ist.

Ein solcher gattungsgemäßer Kabelspeicher ist beispielsweise aus der Druckschrift DE 10 2020 111 247 A1 bekannt. Dort weist der Kabelspeicher zwei senkrechte Profilstreben auf, zwischen denen wenigstens zwei Umlenkrollen mit jeweils waagerechten Drehachsen angeordnet sind. Eine der Umlenkrollen ist ortsfest gelagert und die andere Umlenkrolle ist gegenüber der ortsfesten Umlenkrolle höhenverfahrbar. Ein von dem Kabelspeicher aufgenommenes Elektrokabel lässt sich per Zugkraft einfach aus dem Kabelspeicher herausziehen, wobei die verfahrbare Umlenkrolle auf die ortsfeste Umlenkrolle zubewegt wird. Beim Relaxieren senkt sich die verfahrbare Umlenkrolle der Schwerkraft folgend wieder ab, wodurch das Elektrokabel automatisch wieder aufgewickelt wird.

Aus der Druckschrift DE 10 2019 112 112 A1 ist eine Speichervorrichtung für ein Kfz-Ladekabel bekannt, die ebenfalls einen gattungsgemäßen Kabelspeicher aufweist.

Die aus den Druckschriften DE 10 2020 111 247 A1 und DE 10 2019 112 112 A1 bekannten Kabelspeicher stellen jeweils nur ortsfeste Lösungen zur Kabelspeicherung dar.

Es ist daher die Aufgabe der vorliegenden Erfindung, einen Kabelspeicher für einen mobilen Einsatz zur Verfügung zu stellen, der den Aktionsradius einer damit verbundenen Arbeitsvorrichtung erhöht und auch bei rauen Umgebungsbedingungen eine schonende Zuführung des Elektrokabels zur Arbeitsvorrichtung ermöglicht.

Die Aufgabe wird erfindungsgemäß durch einen Kabelspeicher mit einem ortsfesten ersten Umlenkrollensystem, einem relativ zu dem ersten Umlenkrollensystem höhenverfahrbaren zweiten Umlenkrollensystem und einem Elektrokabel, das um das erste Umlenkrollensystem und das zweite Umlenkrollensystem geschlungen ist, gelöst, wobei der Kabelspeicher einen Mast aufweist, an dem das erste Umlenkrollensystem und das zweite Umlenkrollensystem angeordnet sind, und der Kabelspeicher ein Untergestell und in einer Breitenrichtung des Untergestells ausgerichtete und beidseitig des Mastes ausgebildete Bolzenverbindungsmittel für eine lösbare Verbindung zwischen dem Mast und dem Untergestell aufweist.

Der erfindungsgemäße Kabelspeicher weist ein ortsfestes erstes Umlenkrollensystem und ein relativ zu dem ersten Umlenkrollensystem linear verfahrbares zweites Umlenkrollensystem auf.

Zudem weist der Kabelspeicher ein Elektrokabel auf, welches um das erste Umlenkrollensystem und um das zweite Umlenkrollensystem geschlungen ist. Dabei ist das Elektrokabel abwechselnd um einen halben Umfang des ersten Umlenkrollensystems und des zweiten Umlenkrollensystems herumgeführt. Vorzugsweise ist das Elektrokabel wenigstens dreifach abwechselnd um einen halben Umfang des ersten Umlenkrollensystems und des zweiten Umlenkrollensystems herumgeführt.

Indem an einem freien Ende des Elektrokabels, welches bestimmungsgemäß mit einer Arbeitsvorrichtung zu verbinden ist, gezogen wird, hebt sich das zweite Umlenkrollensystem und bewegt sich in Richtung des ersten, ortsfesten Umlenkrollensystems. Somit lässt sich das Elektrokabel unter Verringerung eines Abstandes zwischen dem ersten und dem zweiten Umlenkrollensystems aus dem Kabelspeicher abziehen. Ohne einen entsprechenden Zug an dem freien Ende des Elektrokabels senkt sich das zweite Umlenkrollensystem wieder ab, wodurch der Abstand zwischen dem ersten und dem zweiten Umlenkrollensystem vergrößert und das Elektrokabel eingezogen wird. Dieser Mechanismus schafft eine rein mechanische Rückholautomatik für das Elektrokabel und sorgt dafür, dass das Elektrokabel stets einer leichten Zugspannung ausgesetzt ist.

Erfindungsgemäß weist der Kabelspeicher ferner einen Mast auf, an dem das erste und das zweite Umlenkrollensystem angeordnet sind. Das erste Umlenkrollensystem ist ortsfest mit dem Mast verbunden. Vorzugsweise ist das erste Umlenkrollensystem an einem Kopfende des Mastes befestigt. Das zweite Umlenkrollensystem ist an dem Mast entlang einer Längsrichtung des Mastes relativ zu dem ersten Umlenkrollensystem verfahrbar.

Der erfindungsgemäße Kabelspeicher weist zudem ein Untergestell und in einer Breitenrichtung des Untergestells ausgerichtete und beidseitig des Mastes ausgebildete Bolzenverbindungsmittel für eine lösbare Verbindung zwischen dem Mast und dem Untergestell auf.

Das Untergestell bildet eine bewegliche Plattform für den Mast und ist vorzugsweise ein Unterwagen oder kann als Unterwagen bezeichnet werden. Das Untergestell weist vorzugsweise Rollen, Räder, Kufen und/oder Ketten auf, auf denen es auf einen Untergrund, wie beispielsweise auf einer Baustelle, bewegt werden kann. Zur Bewegung des Untergestells wird dieses vorzugsweise entweder von einer mit dem Elektrokabel verbundenen Arbeitsvorrichtung, beispielsweise einem Bagger, gezogen oder das Untergestell ist selbstfahrend ausgebildet und weist eine entsprechende Antriebseinrichtung auf.

Über die beidseitig des Mastes ausgebildeten und in der Breitenrichtung des Untergestells verlaufenden Bolzenverbindungsmittel lässt sich der Mast so mit dem Untergestell verbinden, dass er stabil senkrecht auf dem Untergestell steht. Dabei wird unter der Breitenrichtung des Untergestells eine quer zu einer Längsrichtung, die von einer Vorderseite zu einer Rückseite des Untergestells verläuft, verlaufende Ausrichtung des Untergestells verstanden. Insofern das Untergestell ein Unterwagen mit Rädern, Kufen oder Ketten ist, verläuft die Breitenrichtung quer, vorzugsweise in einem Winkel von 90°, zu der Ausrichtung und/oder Bewegungsrichtung der Räder, Kufen oder Ketten. Sowohl die Breitenrichtung als auch die Längsrichtung des Untergestells verlaufen bei funktionsgerechter Aufstellung des Untergestells horizontal, also parallel zu einem Untergrund.

Die beidseitig des Mastes ausgebildeten und in der Breitenrichtung des Untergestells verlaufenden Bolzenverbindungsmittel lassen sich lösen. Wird auf einer Seite des Mastes das dortige Bolzenverbindungsmittel gelöst, lässt sich der Mast so auf dem Untergestell verschieben, dass er stabil liegend auf dem Untergestell verstaut werden kann. In einer solchen Transportposition des Mastes auf dem Untergestell lässt sich der Kabelspeicher einfach transportieren und kann an anderer Stelle leicht wieder errichtet werden.

Bei der Versorgung einer elektrisch angetriebenen Arbeitsvorrichtung mit dem erfindungsgemäßen Kabelspeicher ist der Mast aufrecht auf dem Untergestell aufgestellt und über die Bolzenverbindungsmittel mit dem Untergestell verbunden. Das freie Ende des Elektrokabels ist vorzugsweise an einem Kopfende des Mastes herausgeführt.

Das freie Ende des Elektrokabels ist mit einem Stromanschluss der Arbeitsvorrichtung verbunden. Vorzugsweise befindet sich der Stromanschluss in einer geringeren Höhe als das Kopfende des Mastes, sodass das Elektrokabel von dem Mast nach oben gehalten wird.

Die Arbeitsvorrichtung, beispielsweise ein Bagger, kann über das Elektrokabel in einem Umkreis des Mastes mit Strom versorgt werden, wobei durch das Zusammenwirken des ersten und des zweiten Umlenkrollensystems eine für eine Überbrückung des sich ändernden Abstandes zwischen der Arbeitsvorrichtung und dem Mast benötigte Kabellänge automatisch freigegeben wird. Dadurch dass stets nicht mehr als nur die momentan benötigte Kabellänge freigegeben und das Elektrokabel von oben an die Arbeitsvorrichtung herangeführt ist, berührt das Elektrokabel zu keinem Zeitpunkt den Erdboden. Dadurch ist verhindert, dass das Elektrokabel über den Untergrund geschleift und dadurch beschädigt wird und/oder sich verknotet. Der erfindungsgemäße Kabelspeicher stellt somit eine einfache und zuverlässige Speicherlösung für Elektrokabel bereit, mit der auch sehr starre Elektrokabel in einem rauen Arbeitsumfeld sicher gehandhabt werden können.

Dadurch dass der erfindungsgemäße Kabelspeicher das Untergestell aufweist, ist er selbst verfahrbar und lässt sich somit in einem Baustellenbereich leicht versetzen. Dadurch wird der Aktionsradius einer damit verbundenen Arbeitsvorrichtung erhöht.

In einer bevorzugten Ausführungsform des erfindungsgemäßen Kabelspeichers sind die Bolzenverbindungsmittel an einem Mastfuß, beidseitig des Mastes ausgebildet.

Hierzu sind beidseitig des Mastes vorzugsweise Bolzenaufnahmen der Bolzenverbindungsmittel ausgebildet, wobei das Untergestell axial zu den Bolzenaufnahmen ausgerichtete Bolzendurchführungen aufweist. Dabei sind oder werden Bolzen durch die Bolzendurchführungen und die Bolzenaufnahmen geführt und mit Arretiermitteln fixiert. Bei dieser Ausführungsform erfolgt eine Bolzenverbindung zwischen dem Mast und dem Untergestell vorzugsweise dadurch, dass jeweils ein Bolzen durch eine Bolzendurchführung des Untergestells und durch eine dazu axial ausgerichtete Bolzenaufnahme des Mastes hindurchgeführt ist. Anschließend wird der Bolzen mit einem Arretiermittel gegen ein Verrutschen und/oder Abfallen gesichert. Die Bolzenaufnahmen sind beidseitig des Mastes ausgebildet, sodass jeweils wenigstens ein Bolzen pro Seite des Mastes an dessen Mastfuß zu dessen Befestigung an dem Untergestell vorgesehen ist. Wenn der Mast nur auf einer Seite durch wenigstens einen Bolzen mit dem Untergestell verbunden ist, bildet dieser wenigstens eine Bolzen ein Drehgelenk, um das der Mast gegenüber dem Untergestell verschwenkt werden kann. Damit lässt sich der Mast sicher von einer vertikalen Position, also seiner Arbeitsstellung, in eine waagerechte Position, wie beispielsweise eine Transportstellung, umlegen und von einer waagerechten Position in eine senkrechte Position aufrichten, wobei er an dessen Mastfuß gehalten wird. Dadurch kann der Mastfuß beim Umlegen und Aufrichten des Mastes nicht verrutschen und/oder ausscheren.

Vorzugsweise weist der Mastfuß in der Breitenrichtung des Untergestells einander gegenüberliegende und in eine quer zu der Breitenrichtung verlaufende Längsrichtung des Untergestells ausgerichtete, miteinander querverbundene und aufrecht auf dem Untergestell aufstehende Montageplatten auf.

Jede der Montageplatten weist vorzugsweise zwei Bolzenaufnahmen zur Durchführung eines Bolzens auf. Die in den Montageplatten jeweils ausgebildeten Bolzenaufnahmen liegen sich paarweise gegenüber. Zur Ausbildung der Bolzenverbindungsmittel zwischen dem Mast und dem Untergestell kann beidseitig des Mastes beispielsweise jeweils ein langer Bolzen durch zwei der sich gegenüberliegenden Bolzenaufnahmen der Montageplatten sowie durch die dazu axial ausgerichteten Bolzendurchführungen des Untergestells hindurchgeführt und anschließend durch ein Arretiermittel fixiert werden. In diesem Fall werden die Bolzenverbindungsmittel beidseitig des Mastes jeweils mit Hilfe eines einzigen Bolzens ausgebildet. Stattdessen lassen sich beispielsweise auch beidseitig des Mastes jeweils zwei kürzere Bolzen verwenden, die jeweils nur durch eine Bolzenaufnahme nur einer Montageplatte des Mastes und der zugehörigen Bolzendurchführung des Untergestells hindurchgeführt und jeweils durch ein Arretiermittel fixiert sind. In diesem Fall werden die Bolzenverbindungsmittel beidseitig des Mastes jeweils mit Hilfe zweier Bolzen ausgebildet.

Durch die Montageplatten lässt sich der Mast dann, wenn dieser nur auf einer Seite des Mastes mit dem Untergestell verbunden ist, leichter umlegen und/oder aufrichten.

Die Montageplatten sind miteinander querverbunden, um diese zu stabilisieren und um zu verhindern, dass sich die Montageplatten verbiegen.

Es erweist sich als besonders vorteilhaft, wenn der Kabelspeicher wenigstens ein mit dem zweiten Umlenkrollensystem verbundenes Gegengewicht aufweist. Das zusätzliche Gegengewicht sorgt für eine höhere Rückstellkraft, die das zweite Umlenkrollensystem von dem ersten Umlenkrollensystem wegzieht. Das Gegengewicht ist vorzugsweise entweder starr mit dem zweiten Umlenkrollensystem verbunden oder direkt an diesem befestigt oder über wenigstens eine Kette oder ein Band oder ein Seil mit dem zweiten Umlenkrollensystem verbunden. Bei einer Verbindung des wenigstens einen Gegengewichtes mit dem zweiten Umlenkrollensystem über eine Kette oder ein Band oder ein Seil wird dieses erst angehoben, wenn das zweite Umlenkrollensystem weit genug nach oben gefahren ist, dass die Kette, das Band oder das Seil gespannt ist.

Wenn der Kabelspeicher wenigstens ein mit dem zweiten Umlenkrollensystem verbundenes Gegengewicht aufweist, ergibt sich eine besonders stabile Anordnung, wenn der Mast in Form eines Rahmens ausgebildet ist und das wenigstens eine Gegengewicht innerhalb des Rahmens geführt ist. Dadurch ist das Gegengewicht nur linear entlang einer Längsrichtung des Mastes verfahrbar und kann sowohl bei senkrechter als auch waagerechter Ausrichtung des Mastes nicht aus dem Rahmen heraus pendeln.

In einer weiteren vorteilhaften Ausführungsform weist das wenigstens eine Gegengewicht zwei miteinander verbundene Gewichtsblöcke auf. Durch die zwei miteinander verbundenen Gewichtsblöcke wirkt das Gegengewicht in mehreren Stufen: Ein erster der zwei Gewichtsblöcke hängt an dem zweiten Umlenkrollensystem oder ist starr mit diesem verbunden. Bei einer starren Verbindung erhöht dieser eine Gewichtsblock mit seiner zusätzlichen Masse für jede Höhe des zweiten Umlenkrollensystems die daran angreifende Rückstellkraft. Ist dieser eine Gewichtsblock beispielsweise durch eine Kette oder ein Band oder ein Seil mit dem unteren Umlenkrollensystem verbunden, erhöht dieser, wie es oben bereits erläutert worden ist, erst dann die Rückstellkraft auf das zweite Umlenkrollensystem, wenn die Kette oder das Band oder das Seil gespannt ist. Je weiter das Elektrokabel aus dem Kabelspeicher herausgezogen ist, desto höher ist ein aus dem Kabelspeicher heraushängendes Gewicht des Elektrokabels, dessen Rückholung eine größere Rückstellkraft erfordert. Die dafür benötigte Erhöhung der Rückstellkraft wird durch den zweiten der zwei Gewichtsblöcke bewirkt, der erst ab einer noch größeren Höhe des zweiten Umlenkrollensystems angehoben wird. Vorzugsweise sind die zwei Gewichtsblöcke mit wenigstens einer Kette oder wenigstens einem Band oder wenigstens einem Seil miteinander verbunden. Die wenigstens eine Kette oder das wenigstens eine Band oder das wenigstens eine Seil hebt den zweiten der zwei Gewichtsblöcke erst an, wenn das zweite Umlenkrollensystem durch Herausziehen des Elektrokabels aus dem Kabelspeicher soweit angehoben ist, dass die jeweilige Kette oder das jeweilige Band oder Seil straff gespannt ist.

Es erweist sich als besonders vorteilhaft, wenn der Mast gegenüberliegende, jeweils in einer Längsrichtung des Mastes verlaufende Führungsschienen aufweist, von denen das zweite Umlenkrollensystem geführt ist. Die Führungsschienen garantieren auch bei starkem Wind oder ruckhaftem Ziehen an dem Elektrokabel eine pendelfreie Linearführung des zweiten Umlenkrollensystems.

In einer weiteren besonders vorteilhaften Ausführungsform weisen das erste Umlenkrollensystem und das zweite Umlenkrollensystem jeweils eine Aufwickelwalze mit umlaufenden, parallel zueinander ausgebildeten Führungsrillen auf, an welcher jeweils eine Andrückwalze mit darin ausgebildeten Führungsnuten, die den jeweiligen Führungsrillen gegenüber angeordnet sind, anliegt. Das Elektrokabel liegt in den Führungsrillen der Aufwickelwalze, wobei einzelne Umschlingungen des Elektrokabels jeweils in einer eigenen Führungsrille liegen. Die Führungsnuten der den Aufwickelwalzen jeweils zugeordneten Andrückwalzen sind den jeweiligen Führungsrillen gegenüber angeordnet. Dadurch wird das Elektrokabel auf einer Seite durch die Führungsrillen geführt und auf einer den Führungsrillen gegenüberliegenden Seite durch die Führungsnuten der Andrückwalze in den jeweiligen Führungsrillen gehalten. Somit verhindern die Andrückwalzen, dass das Elektrokabel aus den Führungsrillen schlüpft, was sich insbesondere beim Transport des Kabelspeichers als besonders nützlich erweist.

Für eine einfache Montage und/oder Demontage des Kabelspeichers ist es besonders vorteilhaft, wenn der Mast einen Mastkopf aufweist, an dem eine Hakenöse ausgebildet ist. In die Hakenöse lässt sich beispielsweise ein Kranhaken einhängen, um den Mast an dessen Mastkopf anzuheben. Mit einem durch die Hakenöse geführten Kranhaken eines Krans oder Schleppfahrzeuges lässt sich der Mast einfach umlegen und/oder aufrichten. Für einen liegenden Transport des Mastes auf dem Untergestell ist es vorteilhaft, wenn der Mast einseitig auskragende Auflagestützen aufweist. Beispielsweise sind vier solcher Auflagestützen vorgesehen. In einer waagerechten Transportposition des Mastes liegt dieser auf den einseitig aus dem Mast auskragenden Auflagestützen auf, sodass das Elektrokabel nicht zwischen dem Mast und dem Untergestell eingeklemmt wird.

In einer favorisierten Ausführungsform des erfindungsgemäßen Kabelspeichers weist das Untergestell über Querstreben miteinander verbundene Kufen auf. Das Untergestell liegt mit den Kufen auf einem Untergrund auf und kann von einer mit dem Kabelspeicher verbundenen Arbeitsvorrichtung, beispielsweise mithilfe eines Schleppseils oder einer Kette, über den Boden gezogen werden. Die Kufen eignen sich aber auch sehr gut, um das Untergestell auf einem Sattelschlepper oder einer Lkw-Ladefläche aufzunehmen und dort zu sichern.

In einer vorteilhaften Ausführungsform des erfindungsgemäßen Kabelspeichers weist dieser eine Kabeltrommel auf, die separat von dem Mast auf dem Untergestell angeordnet ist. Auf der Kabeltrommel ist ein Verlängerungskabel aufgewickelt, das mit dem an dem Mast des Kabelspeichers befindlichen Elektrokabel und andererseits mit einer Spannungsquelle verbunden werden kann. Durch Auf- und Abwickeln des Verlängerungskabels kann eine freie Länge des abgewickelten Verlängerungskabels variiert werden, um so unterschiedliche Abstände zwischen dem Kabelspeicher und der Spannungsquelle zu überbrücken. Beispielsweise lässt sich der erfindungsgemäße Kabelspeicher durch die Kabeltrommel auf einer Baustelle verrücken, ohne dass dazu das Verlängerungskabel von der Spannungsquelle getrennt werden muss. Gleichzeitig ist ein nicht benötigter Längenabschnitt des Verlängerungskabels sicher auf der Kabeltrommel verstaut und wird nicht über den Boden geschleift.

In einer weiteren besonders vorteilhaften Ausführungsform des erfindungsgemäßen Kabelspeichers sind an einem Kabelausgang des Mastes wenigstens zwei Führungsrollen angeordnet, zwischen die das Elektrokabel geklemmt ist, wobei um einen Endabschnitt des Elektrokabels eine Kabelbremshülse angebracht ist. Die zwei Führungsrollen am Kabelausgang des Mastes sorgen dafür, dass das Elektrokabel immer in einer gleichen Richtung von dem ersten Umlenkrollensystem abgezogen wird, sodass das Elektrokabel auf dem ersten Umlenkrollensystem nicht verrutscht. Durch die Führungsrollen macht es daher für einen Abzug des Elektrokabels von dem ersten Umlenkrollensystems keinen Unterschied, ob das Elektrokabel längs oder quer zu der Breitenrichtung des Untergestells abgezogen wird. Zudem bilden die Führungsrollen einen Anschlag für eine Kabelbremshülse, die an einem Endabschnitt des Elektrokabels ausgebildet ist. Mit einem Anschlagen der Kabelbremshülse an den Führungsrollen lässt sich das Elektrokabel nicht weiter in den Kabelspeicher hineinziehen. Dadurch verbleibt eine Mindestlänge des Elektrokabels stets außerhalb des Mastes.

Wenn an einem Kabelausgang des Mastes wenigstens zwei Führungsrollen angeordnet sind, erweist es sich als besonders geschickt, wenn die wenigstens zwei Führungsrollen an einem im Winkel zu dem Mast geneigten Montagerahmen montiert sind. Der geneigte Montagerahmen erleichtert einen Abzug des Elektrokabels hinein in einen Bewegungsbereich einer mit dem Elektrokabel verbundenen Arbeitsvorrichtung, beispielsweise einem Bagger. Der Bewegungsbereich erstreckt sich typischerweise kreisringförmig um den Mast des Kabelspeichers herum, welcher einschließlich des Untergestells gedreht werden kann. Durch den in einem Winkel zum Mast geneigten Montagerahmen sind die Führungsrollen derart schräg nach unten gestellt, dass das von den Führungsrollen geklemmte Elektrokabel ausgehend von dem Kabelausgang des Mastes in einer Linie schräg nach unten in den Bewegungsbereich der Arbeitsvorrichtung abgezogen werden kann.

Besonders vorteilhafte Ausführungsformen des erfindungsgemäßen Kabelspeichers, deren Aufbau, Funktion und Vorteile werden nachfolgend anhand von Figuren erläutert, wobei
- Figur 1: schematisch eine Ausführungsform des erfindungsgemäßen Kabelspeichers mit einem senkrecht aufgestellten Mast in einer perspektivischen Seitenansicht zeigt;
- Figur 2: schematisch den Kabelspeicher aus Figur 1 mit dem senkrecht aufgestellten Mast in einer Seitenansicht zeigt;
- Figur 3: schematisch den Kabelspeicher aus Figur 1 mit umgelegtem Mast in einer Seitenansicht zeigt;
- Figur 4: schematisch den Kabelspeicher aus Figur 1 mit einem für einen Transport umgelegten Mast in einer Seitenansicht zeigt;
- die Figuren 5A bis 5D: schematisch nur den Mast aus Figur 1 mit unterschiedlichen Abständen zwischen einem ersten und einem zweiten Umlenkrollensystem jeweils in einer perspektivischen Seitenansichten zeigen;
- Figur 6: schematisch den Mastkopf des Kabelspeichers aus Figur 1 zeigt; und
- Figur 7: schematisch eine weitere Ausführungsform des erfindungsgemäßen Kabelspeichers in einer Seitenansicht zeigt.

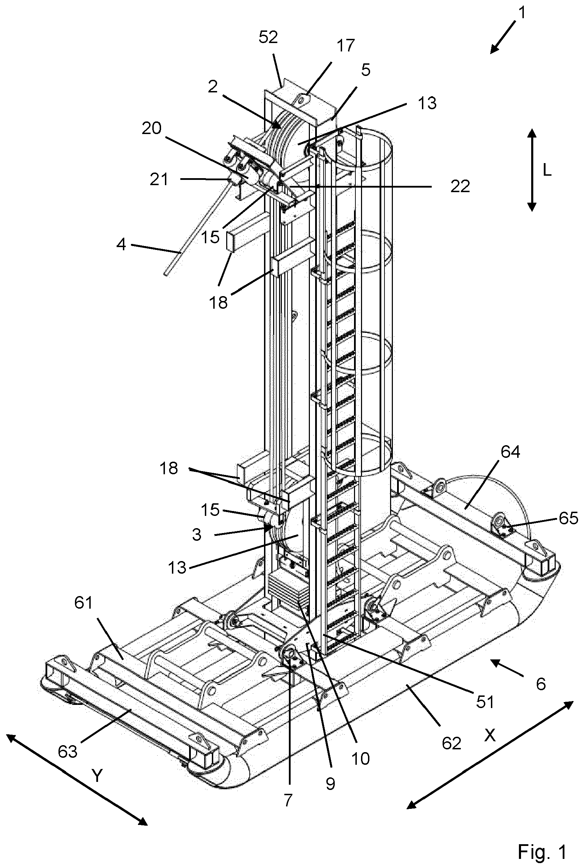

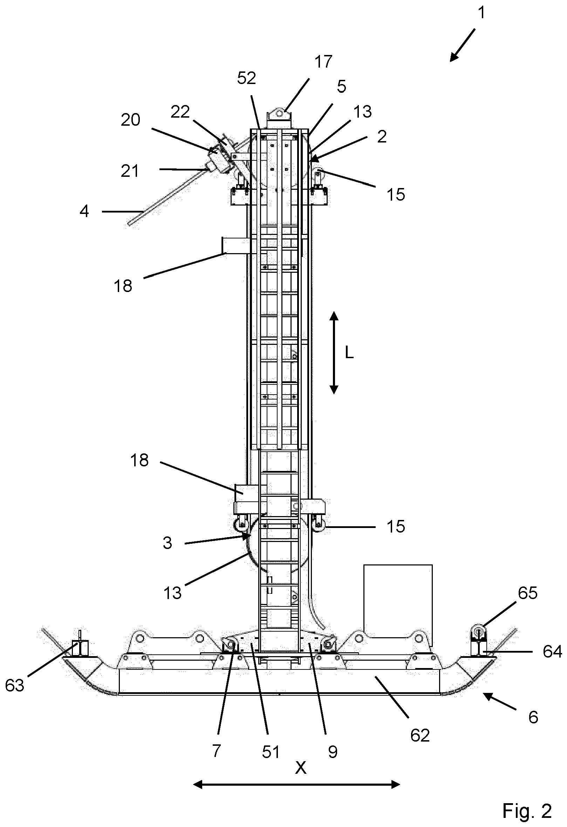

In Figur 1 ist eine Ausführungsform des erfindungsgemäßen Kabelspeichers 1 in einer perspektivischen Seitenansicht gezeigt. Figur 2 zeigt die gleiche Ausführungsform des erfindungsgemäßen Kabelspeichers 1, wie sie in Figur 1 dargestellt ist, allerdings in einer Seitenansicht.

Der Kabelspeicher 1 weist ein ortsfestes erstes Umlenkrollensystem 2 und ein zweites Umlenkrollensystem 3 auf. Das zweite Umlenkrollensystem 3 ist relativ zu dem ersten Umlenkrollensystem 2 linear in seiner Höhe verfahrbar.

Der Kabelspeicher 1 weist ein Elektrokabel 4 auf, welches abwechselnd jeweils um einen halben Umfang des ersten Umlenkrollensystems 2 und des zweiten Umlenkrollensystems 3 geschlungen ist. Bei der in der Figur 1 gezeigten Ausführungsform ist das Elektrokabel 4 insgesamt drei Mal um das erste Umlenkrollensystem 2 und das zweite Umlenkrollensystem 3 geschlungen. Das Elektrokabel 4 könnte aber auch mehr oder weniger häufig um die Umlenkrollensysteme 2, 3 geschlungen sein. Ein Ende des Elektrokabels 4 ist dazu bestimmt, direkt oder indirekt mit einer Spannungsquelle verbunden zu werden. Ein anderes Ende des Elektrokabels 4 ist dazu bestimmt, mit einer elektrisch arbeitenden Arbeitsvorrichtung verbunden zu werden, um diese mit elektrischem Strom zu versorgen.

Vorliegend ist in den Figuren der besseren Übersichtlichkeit halber auf die Darstellung sowohl einer Spannungsquelle als auch einer Arbeitsvorrichtung verzichtet worden.

Der in den Figuren 1 und 2 dargestellte Kabelspeicher 1 ist insbesondere für eine Stromversorgung leistungsstarker Arbeitsvorrichtungen geeignet. Hierzu zählen beispielsweise mobile oder semimobile Baumaschinen und Baustellenfahrzeuge, wie Raupen, Bagger, Radlader, Brecher, Hacker, Siebmaschinen oder Kräne, aber auch landwirtschaftliche Maschinen, Bergbautechnik etc.

Der Kabelspeicher 1 weist einen Mast 5 und ein Untergestell 6 auf. Das Untergestell 6 weist eine Längsrichtung X und eine Breitenrichtung Y auf. An dem Mast 5 sind das erste Umlenkrollensystem 2 und das zweite Umlenkrollensystem 3 angeordnet.

Bei der in den Figuren 1 und 2 gezeigten Ausführungsform des Kabelspeichers 1 steht der Mast 5 aufrecht auf dem Untergestell 6. Dabei ist er mittels beidseitig des Mastes 5 ausgebildeter und in der Breitenrichtung Y des Untergestells 6 verlaufender Bolzenverbindungsmittel 7 mit dem Untergestell 6 verbunden. Durch wenigstens einseitiges Lösen der beidseitig des Mastes 5 ausgebildeten Bolzenverbindungsmittel 7 lässt sich der Mast 5 leicht nach einer Seite umlegen.

Das Untergestell 6 weist bei der in den Figuren 1 und 2 dargestellten Ausführungsform der Erfindung über Querstreben 61 miteinander verbundene Kufen 62 auf. Die Kufen 62 verlaufen in der Längsrichtung X des Untergestells 6. Das Untergestell 6 liegt mit den Kufen 62 auf einem Untergrund auf und kann von einer mit dem Kabelspeicher 1 verbundenen Arbeitsvorrichtung, beispielsweise mithilfe eines Schleppseils oder einer Kette, über den Untergrund gezogen werden. Die Kufen 62 eignen sich aber auch sehr gut, um das Untergestell 6 auf einem Sattelschlepper oder einer Lkw-Ladefläche aufzunehmen und dort zu sichern. Statt Kufen 62 kann das Untergestell 6 auch Rollen, Räder und/oder Ketten aufweisen. Das Untergestell 6 bildet einen verfahrbaren Unterwagen, d. h., eine bewegliche Plattform für den Mast 5, die entweder über den Untergrund gezogen wird oder selbst einen Antriebsmechanismus für eine Fortbewegung aufweist.

Die Bolzenverbindungsmittel 7 sind bei der in den Figuren 1 und 2 gezeigten Ausführungsform des Kabelspeichers 1 dadurch ausgebildet, dass an einem Mastfuß 51, beidseitig des Mastes 5 Bolzenaufnahmen ausgebildet sind und das Untergestell 6 axial zu den Bolzenaufnahmen ausgerichtete Bolzendurchführungen aufweist. Durch die Bolzendurchführungen und die Bolzenaufnahmen sind Bolzen geführt und diese mit Arretiermitteln fixiert. Dies bildet eine zuverlässige und zugleich leicht lösbare Verbindung des Mastes 5 mit dem Untergestell 6.

Der Mastfuß weist bei der gezeigten Ausführungsform des Kabelspeichers 1 in der Längsrichtung X des Untergestells 6 ausgerichtete, aufrecht auf dem Untergestell 6 aufgestellte und einander in der Breitenrichtung Y des Untergestells 6 gegenüberliegende Montageplatten 9 auf, in denen die Bolzenaufnahmen ausgebildet sind. Jede der Montageplatten 9 weist in der gezeigten Ausführungsform zwei Bolzenaufnahmen zur Durchführung jeweils eines Bolzens auf. Die in den Montageplatten 10 jeweils ausgebildeten Bolzenaufnahmen liegen sich paarweise gegenüber. Zur Ausbildung einer Bolzenverbindung zwischen dem Mast 5 und dem Untergestell 6 sind in der gezeigten Ausführungsform insgesamt vier Bolzen, die beidseitig des Mastes 5 und einander gegenüber angeordnet sind, jeweils durch eine der Bolzenaufnahmen einer der Montageplatten 9 und die axial dazu ausgerichtete Bolzendurchführung des Untergestells 6 hindurchgeführt. Die Bolzen sind jeweils durch ein Arretiermittel vor einem Verrutschen und/oder Abfallen gesichert.

Alternativ kann beidseitig des Mastes 5 jeweils ein langer Bolzen durch zwei sich gegenüberliegende, in den Montageplatten 9 ausgebildete Bolzenaufnahmen sowie die dazu axial ausgerichteten Bolzendurchführungen des Untergestells 6 hindurchgeführt und anschließend durch ein Arretiermittel fixiert werden. In diesem Fall werden die Bolzenverbindungsmittel 7 beidseitig des Mastes 5 jeweils mit Hilfe nur eines Bolzens ausgebildet.

Wenn der Mast 5 nur auf einer Seite durch eine entsprechende Bolzenverbindung mit dem Untergestell 6 verbunden ist, d. h., wenn die Bolzenverbindung auf der anderen Seite des Mastes 5 gelöst ist, bildet die nicht gelöste Bolzenverbindung ein Drehgelenk, um die der Mast 5 gegenüber dem Untergestell 6 verschwenkt werden kann. Damit lässt sich der Mast 6 sicher von einer vertikalen Position in eine waagerechte Position umlegen und von einer waagerechten Position in eine senkrechte Position aufrichten, wobei er an dem Mastfuß 51 gehalten wird.

Die aufrecht stehenden Montageplatten 9 bestimmen die Richtung, in die der Mast 5 umgelegt werden kann, und halten diesen seitlich.

Die Montageplatten 9 sind bei der in den Figuren 1 und 2 gezeigten Ausführungsform des Kabelspeichers 1 über Stützprofile miteinander querverbunden und werden durch diese stabilisiert.

Bei der in den Figuren 1 und 2 gezeigten Ausführungsform des Kabelspeichers 1 weist das erste Umlenkrollensystem (2) und das zweite Umlenkrollensystem 3 jeweils eine Aufwickelwalze 13 auf, an der jeweils zwei Andrückwalzen 15 anliegen.

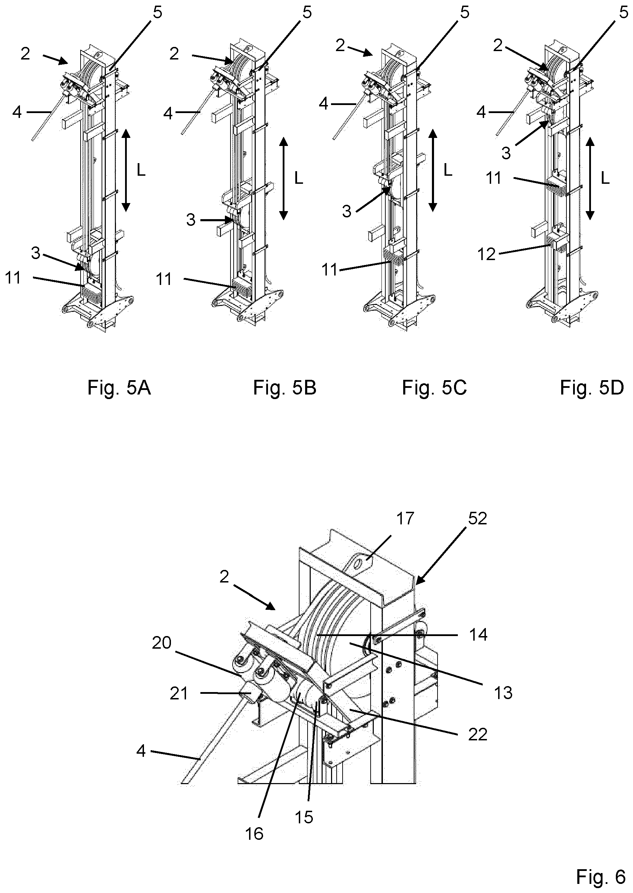

Wie es in Figur 6 zu sehen ist, weisen die Aufwickelwalzen 13 umlaufende, parallel zueinander ausgebildete Führungsrillen 14 und die Andrückwalzen 15 in diesen ausgebildete Führungsnuten 16 auf, die den jeweiligen Führungsrillen 14 gegenüber angeordnet sind. Das Elektrokabel 4 liegt in den Führungsrillen 14 der Aufwickelwalze 13, sodass einzelne Umschlingungen des Elektrokabels 4 jeweils in einer eigenen Führungsrille 14 liegen. Zusätzlich wird das Elektrokabel 4 von einer den Führungsrillen 14 gegenüberliegenden Seite her durch die Führungsnuten 16 der Andrückwalze 15 in den jeweiligen Führungsrillen 14 gehalten. Dadurch verhindern die Andrückwalzen 15, dass das Elektrokabel 4 auch dann nicht aus den Führungsrillen 14 schlüpfen kann, wenn an dem Elektrokabel 4 ruckhaft gezogen wird oder der Mast 5 liegend transportiert wird.

Bei der in den Figuren 1 und 2 gezeigten Ausführungsform des Kabelspeichers 1 weist dessen Mast 5 einen Mastkopf 52 auf, an dem eine Hakenöse 17 ausgebildet ist. An der Hakenöse 17 lässt sich beispielsweise ein Kranhaken befestigen, um den Mast 5 aufzurichten und/oder umzulegen.

Bei der in den Figuren 1 und 2 gezeigten Ausführungsform des Kabelspeichers 1 weist dessen Mast 5 einseitig auskragende Auflagestützen 18 auf, auf denen der Mast 5 in einer waagerechten Position, d. h. liegend, auf dem Untergestell 6 abgesetzt werden kann. Bei der gezeigten Ausführungsform weist der Mast 5 ein oberes Paar von Auflagestützen 18 und ein unteres Paar von Auflagestützen 18 auf, die jeweils auf einer quer zu dem Untergestell 6 verlaufenden Auflagestrebe 63 abgesetzt werden können.

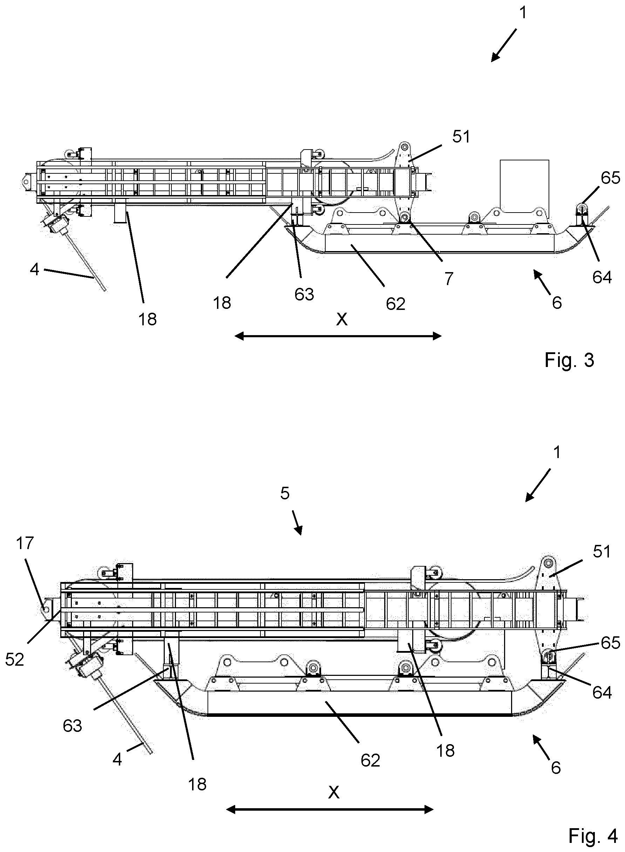

Die Figuren 3 und 4 zeigen, jeweils in einer Seitenansicht, den Kabelspeicher 1 aus den Figuren 1 und 2, jeweils mit liegendem Mast 5. Dabei liegt der Mast 5 in der Längsrichtung X auf dem Untergestell 6.

In Figur 3 ist gezeigt, wie der Mast 5 nur einseitig mit Bolzenverbindungsmitteln 7 mit dem Untergestell 6 verbunden ist. Die einseitigen Bolzenverbindungsmittel 7 bilden ein Drehgelenk, um das sich der Mast 5 verschwenken lässt. Dadurch kann der Mast 5 von einer senkrechten Position in eine waagerechte Position umgelegt werden und umgekehrt. In der waagerechten Position des Mastes 5 liegt das untere Paar von Auflagestützen 18 auf der Auflagestrebe 63 des Untergestells 6 auf. Dabei ist der Mastfuß 51 auf einer dem Untergestell 6 zugewandten Seite des Mastes 5 durch die Bolzenverbindungsmittel 7 mit dem Untergestell 6 verbunden und somit vor einem Verrutschen und/oder Ausscheren gesichert.

In Figur 4 ist die dort gezeigte Ausführungsform des Kabelspeichers 1 in einer Transportposition dargestellt. Der Mast 5 liegt dabei mit dem oberen Paar von Auflagestützen 18 auf der Auflagestrebe 63 des Untergestells 6 auf. Der Mastfuß 51 liegt auf einer quer zum Untergestell 6 verlaufenden Auflagestrebe 64. Die Auflagestreben 63 und 64 sind, wie es in den Figuren 3 und 4 gezeigt ist, vorzugsweise jeweils an gegenüberliegenden Längsenden des Untergestells 6 angeordnet. Für eine Transportsicherung des Mastes 5 sind an der Auflagestrebe 64 winkelförmige Sicherungsstrukturen 65 angeordnet, durch die sich Sicherungsbolzen zur Fixierung des Mastfußes 51 hindurchführen lassen. Bei der gezeigten Ausführungsform des Kabelspeichers 1 sind die winkelförmigen Sicherungsstrukturen 65 derart ausgebildet und auf der Auflagestrebe 64 angeordnet, dass sich die Bolzen, die auch zur Ausbildung der Bolzenverbindungsmittel 7 zwischen dem Mast 5 und dem Untergestell 6 verwendet werden, ebenso als Sicherungsbolzen für die Transportsicherung verwenden lassen.

In den Figuren 5A bis 5D ist nur der Mast 5 der in der Figur 1 gezeigten Ausführungsform des Kabelspeichers 1 dargestellt.

Wie es in den Figuren 5A bis 5D zu sehen ist, weist der Kabelspeicher 1 ein mit dem zweiten Umlenkrollensystem 3 verbundenes Gegengewicht 10 auf. Das Gegengewicht 10 sorgt für eine höhere Rückstellkraft, die das zweite Umlenkrollensystem 3 von dem ersten Umlenkrollensystem 2 wegzieht. Das Gegengewicht 10 weist bei der gezeigten Ausführungsform des Kabelspeichers 1 zwei Gewichtsblöcke 11, 12 auf. Ein erster der zwei Gewichtsblöcke 11 ist über zwei Ketten mit dem zweiten Umlenkrollensystem 3 verbunden. Wie es in Figur 5C zu sehen ist, wird dieser Gewichtsblock 11 erst angehoben, wenn das zweite Umlenkrollensystem 3 weit genug nach oben gefahren ist, um die zwei Ketten straff zu spannen.

Ein zweiter der zwei Gewichtsblöcke 12 ist über zwei Ketten mit dem anderen Gewichtsblock 11 verbunden und wird erst angehoben, wenn das untere Umlenkrollensystem 3, wie es in Figur 5D zu sehen ist, noch weiter nach oben gefahren wird. Durch die zwei mittels Ketten miteinander verbundenen Gewichtsblöcke 11, 12 wird die an dem zweiten Umlenkrollensystem 3 angreifende Rückstellkraft in mehreren Stufen erhöht, um eine wachsende Zugkraft eines aus dem Mast 5 immer weiter herausgeführten Elektrokabels 4 kompensieren zu können.

Der Mast 5 ist bei der gezeigten Ausführungsform als ein Rahmen ausgebildet, in dem das wenigstens eine Gegengewicht 10 geführt ist. Dadurch ist das Gegengewicht 10 nur linear entlang einer Längsrichtung L des Mastes 5 verfahrbar und kann sowohl bei senkrechter als auch waagerechter Ausrichtung des Mastes 5 nicht aus dem Rahmen heraus pendeln.

Der Mast 5 weist in der in den Figuren 5A bis 5D gezeigten Ausführungsform gegenüberliegende, jeweils in einer Längsrichtung L des Mastes 5 verlaufende Führungsschienen auf, von denen das zweite Umlenkrollensystem 3 geführt ist. Die Führungsschienen garantieren auch bei starkem Wind und ruckhaftem Ziehen an dem Elektrokabel 4 eine pendelfreie Linearführung des zweiten Umlenkrollensystems 3.

Figur 6 zeigt eine vergrößerte Darstellung des Mastkopfes 52 der in der Figur 1 gezeigten Ausführungsform des Kabelspeichers 1.

Wie es in Figur 6 gut zu sehen ist, sind bei der gezeigten Ausführungsform an einem Kabelausgang des Mastes 5 zwei Führungsrollen 20 angeordnet, zwischen die das Elektrokabel 4 geklemmt ist. Zudem ist um einen Endabschnitt des Elektrokabels 4 eine Kabelbremshülse 21 angebracht. Die zwei Führungsrollen 20 am Kabelausgang des Mastes 5 sorgen dafür, dass das Elektrokabel 4 immer in einer gleichen Richtung von dem ersten Umlenkrollensystem 2 abgezogen wird, ganz gleich ob das Elektrokabel 4 in der Längsrichtung X des Untergestells 6 oder der Breitenrichtung Y des Untergestells 6 abgezogen wird. Zudem bilden die Führungsrollen 20 einen Anschlag für die Kabelbremshülse 21, die an einem Endabschnitt des Elektrokabels 4 ausgebildet ist. Mit einem Anschlagen der Kabelbremshülse 21 an den Führungsrollen 20 verbleibt eine Mindestlänge des Elektrokabels 4 stets außerhalb des Mastes 5.

Anstatt das Elektrokabel 4 zwischen zwei Führungsrollen 20 zu klemmen, kann es auch durch eine am Kabelausgang des Mastes 5 angeordnete Öse geführt werden.

Die zwei Führungsrollen 20 sind an einem in einem Winkel zu dem Mast 5 geneigten Montagerahmen 22 montiert. Der geneigte Montagerahmen 22 erleichtert einen Abzug des Elektrokabels 4 hinein in einen Bewegungsbereich einer mit dem Elektrokabel 4 verbundenen Arbeitsvorrichtung, der sich typischerweise kreisringförmig um den Mast 5 des Kabelspeichers 1 herum erstreckt.

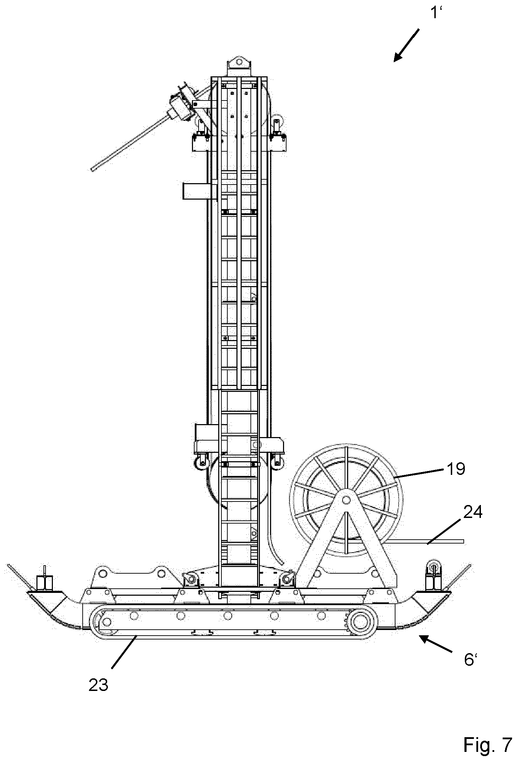

Figur 7 zeigt eine zweite Ausführungsform des erfindungsgemäßen Kabelspeichers 1', die in ihrem Aufbau bis auf das Untergestell 6' und eine zusätzliche Kabeltrommel 19 mit der in Figur 1 gezeigten Ausführungsform des Kabelspeichers 1 übereinstimmt.

Nachfolgend werden daher nur die Unterschiede zwischen den beiden Ausführungsformen des erfindungsgemäßen Kabelspeichers 1, 1' beschrieben.

Bei der in der Figur 7 gezeigten Ausführungsform des Kabelspeichers 1' weist dieser zusätzlich die Kabeltrommel 19 auf. Die Kabeltrommel 19 ist separat von dem Mast 5 auf dem Untergestell 6' angeordnet. Auf der Kabeltrommel 19 ist ein Verlängerungskabel 24 aufgewickelt, um auch größere Abstände zwischen dem Kabelspeicher 1' und einer Spannungsquelle überbrücken zu können. Dadurch lässt sich der Kabelspeicher 1' verrücken, ohne dass eine Stromversorgung zu einer an den Kabelspeicher 1' angeschlossenen Arbeitsvorrichtung unterbrochen werden muss.

Das Untergestell 6' weist bei der in der Figur 7 gezeigten Ausführungsform des Kabelspeichers 1' zusätzlich Ketten 23 auf und ist durch einen zusätzlichen Motor und Kettenantrieb selbstfahrend ausgebildet. Der in Figur 7 gezeigte Kabelspeicher 1' kann ohne eine Zugmaschine auf einer Baustelle verfahren und dort an unterschiedlichen Stellen für die Stromversorgung von Baustellenfahrzeugen und Arbeitseinrichtungen verwendet werden.

## Patentansprüche

1. Kabelspeicher (1, 1') mit einem ortsfesten ersten Umlenkrollensystem (2), einem relativ zu dem ersten Umlenkrollensystem (2) höhenverfahrbaren zweiten Umlenkrollensystem (3) und einem Elektrokabel (4), das um das erste Umlenkrollensystem (2) und das zweite Umlenkrollensystem (3) geschlungen ist, **dadurch gekennzeichnet, dass** der Kabelspeicher (1, 1') einen Mast (5) aufweist, an dem das erste Umlenkrollensystem (2) und das zweite Umlenkrollensystem (3) angeordnet sind, und der Kabelspeicher (1, 1') ein Untergestell (6, 6') und in einer Breitenrichtung (Y) des Untergestells (6, 6`) ausgerichtete und beidseitig des Mastes (5) ausgebildete Bolzenverbindungsmittel (7) für eine lösbare Verbindung zwischen dem Mast (5) und dem Untergestell (6, 6') aufweist.

2. Kabelspeicher nach Anspruch 1, **dadurch gekennzeichnet, dass** die Bolzenverbindungsmittel (7) an einem Mastfuß (51), beidseitig des Mastes (5) ausgebildet sind.

3. Kabelspeicher nach Anspruch 2, **dadurch gekennzeichnet, dass** der Mastfuß (51) in der Breitenrichtung (Y) des Untergestells (6, 6') einander gegenüberliegende und in eine quer zu der Breitenrichtung (Y) verlaufende Längsrichtung (X) des Untergestells ausgerichtete, miteinander querverbundene und aufrecht auf dem Untergestell (6, 6') aufstehende Montageplatten (9) aufweist.

4. Kabelspeicher nach einem der vorhergehenden Ansprüche, **dadurch gekennzeichnet, dass** der Kabelspeicher (1, 1') wenigstens ein mit dem zweiten Umlenkrollensystem (3) verbundenes Gegengewicht (10) aufweist.

5. Kabelspeicher nach Anspruch 4, **dadurch gekennzeichnet, dass** der Mast (5) in Form eines Rahmens ausgebildet ist und das wenigstens eine Gegengewicht (10) innerhalb des Rahmens geführt ist.

6. Kabelspeicher nach Anspruch 4 oder 5, **dadurch gekennzeichnet, dass** das wenigstens eine Gegengewicht (10) zwei miteinander verbundene Gewichtsblöcke (11, 12) aufweist.

7. Kabelspeicher nach einem der vorhergehenden Ansprüche, **dadurch gekennzeichnet, dass** der Mast (5) gegenüberliegende, jeweils in einer Längsrichtung (L) des Mastes (5) verlaufende Führungsschienen aufweist, von denen das zweite Umlenkrollensystem (3) geführt ist.

8. Kabelspeicher nach einem der vorhergehenden Ansprüche, **dadurch gekennzeichnet, dass** das erste Umlenkrollensystem (2) und das zweite Umlenkrollensystem (3) jeweils eine Aufwickelwalze (13) mit umlaufenden, parallel zueinander ausgebildeten Führungsrillen (14) aufweisen, an welcher jeweils wenigstens eine Andrückwalze (15) mit darin ausgebildeten Führungsnuten (16), die den jeweiligen Führungsrillen (14) gegenüber angeordnet sind, anliegt.

9. Kabelspeicher nach einem der vorhergehenden Ansprüche, **dadurch gekennzeichnet, dass** der Mast (5) einen Mastkopf (52) aufweist, an dem eine Hakenöse (17) ausgebildet ist.

10. Kabelspeicher nach einem der vorhergehenden Ansprüche, **dadurch gekennzeichnet, dass** der Mast (5) einseitig auskragende Auflagestützen (18) aufweist.

11. Kabelspeicher nach einem der vorhergehenden Ansprüche, **dadurch gekennzeichnet, dass** das Untergestell (6, 6') über Querstreben (61) miteinander verbundene Kufen (62) aufweist.

12. Kabelspeicher nach einem der vorhergehenden Ansprüche, **dadurch gekennzeichnet, dass** der Kabelspeicher (1, 1') eine Kabeltrommel (19) aufweist, die separat von dem Mast (5) auf dem Untergestell (6, 6') angeordnet ist.

13. Kabelspeicher nach einem der vorhergehenden Ansprüche, **dadurch gekennzeichnet, dass** an einem Kabelausgang (53) des Mastes (5) wenigstens zwei Führungsrollen (20) angeordnet sind, zwischen welchen das Elektrokabel (4) geklemmt ist, wobei um einen Endabschnitt des Elektrokabels (4) eine Kabelbremshülse (21) angebracht ist.

14. Kabelspeicher nach Anspruch 13, **dadurch gekennzeichnet, dass** die wenigstens zwei Führungsrollen (20) an einem im Winkel zu dem Mast (5) geneigten Montagerahmen (22) montiert sind.

## Geänderte Patentansprüche

### Geänderte Patentansprüche gemäss Regel 137(2) EPÜ.

1. Kabelspeicher (1, 1') mit einem ortsfesten ersten Umlenkrollensystem (2), einem relativ zu dem ersten Umlenkrollensystem (2) höhenverfahrbaren zweiten Umlenkrollensystem (3) und einem Elektrokabel (4), das um das erste Umlenkrollensystem (2) und das zweite Umlenkrollensystem (3) geschlungen ist, wobei der Kabelspeicher (1, 1') einen Mast (5) aufweist, an dem das erste Umlenkrollensystem (2) und das zweite Umlenkrollensystem (3) angeordnet sind, und der Kabelspeicher (1, 1') ein Untergestell (6, 6') und in einer Breitenrichtung (Y) des Untergestells (6, 6') ausgerichtete und beidseitig des Mastes (5) ausgebildete Bolzenverbindungsmittel (7) für eine lösbare Verbindung zwischen dem Mast (5) und dem Untergestell (6, 6') aufweist, **dadurch gekennzeichnet, dass** die Bolzenverbindungsmittel (7) an einem Mastfuß (51), beidseitig des Mastes (5) ausgebildet sind, der Mastfuß (51) in der Breitenrichtung (Y) des Untergestells (6, 6') einander gegenüberliegende und in eine quer zu der Breitenrichtung (Y) verlaufende Längsrichtung (X) des Untergestells (6, 6') ausgerichtete, miteinander querverbundene und aufrecht auf dem Untergestell (6, 6') aufstehende Montageplatten (9) aufweist, wobei jede der Montageplatten (9) zwei Bolzenaufnahmen zur Durchführung eines Bolzens aufweist, die in den Montageplatten (9) jeweils ausgebildeten Bolzenaufnahmen sich paarweise gegenüberliegen, zur Ausbildung der Bolzenverbindungsmittel (7) zwischen dem Mast (5) und dem Untergestell (6, 6') beidseitig des Mastes (5) jeweils ein langer Bolzen durch zwei der sich gegenüberliegenden Bolzenaufnahmen der Montageplatten (9) sowie durch die dazu axial ausgerichteten Bolzendurchführungen des Untergestells (6, 6') hindurchgeführt und durch ein Arretiermittel fixiert ist, sodass die Bolzenverbindungsmittel (7) beidseitig des Mastes (5) jeweils mit Hilfe eines einzigen Bolzens ausgebildet sind oder beidseitig des Mastes (5) jeweils zwei kürzere Bolzen jeweils nur durch eine Bolzenaufnahme nur einer Montageplatte (9) des Mastes (5) und der zugehörigen Bolzendurchführung des Untergestells (6, 6') hindurchgeführt und jeweils durch ein Arretiermittel fixiert sind, sodass die Bolzenverbindungsmittel (7) beidseitig des Mastes (5) jeweils mit Hilfe zweier Bolzen ausgebildet sind.

2. Kabelspeicher nach einem der vorhergehenden Ansprüche, **dadurch gekennzeichnet, dass** der Kabelspeicher (1, 1') wenigstens ein mit dem zweiten Umlenkrollensystem (3) verbundenes Gegengewicht (10) aufweist.

3. Kabelspeicher nach Anspruch 2, **dadurch gekennzeichnet, dass** der Mast (5) in Form eines Rahmens ausgebildet ist und das wenigstens eine Gegengewicht (10) innerhalb des Rahmens geführt ist.

4. Kabelspeicher nach Anspruch 2 oder 3, **dadurch gekennzeichnet, dass** das wenigstens eine Gegengewicht (10) zwei miteinander verbundene Gewichtsblöcke (11, 12) aufweist.

5. Kabelspeicher nach einem der vorhergehenden Ansprüche, **dadurch gekennzeichnet, dass** der Mast (5) gegenüberliegende, jeweils in einer Längsrichtung (L) des Mastes (5) verlaufende Führungsschienen aufweist, von denen das zweite Umlenkrollensystem (3) geführt ist.

6. Kabelspeicher nach einem der vorhergehenden Ansprüche, **dadurch gekennzeichnet, dass** das erste Umlenkrollensystem (2) und das zweite Umlenkrollensystem (3) jeweils eine Aufwickelwalze (13) mit umlaufenden, parallel zueinander ausgebildeten Führungsrillen (14) aufweisen, an welcher jeweils wenigstens eine Andrückwalze (15) mit darin ausgebildeten Führungsnuten (16), die den jeweiligen Führungsrillen (14) gegenüber angeordnet sind, anliegt.

7. Kabelspeicher nach einem der vorhergehenden Ansprüche, **dadurch gekennzeichnet, dass** der Mast (5) einen Mastkopf (52) aufweist, an dem eine Hakenöse (17) ausgebildet ist.

8. Kabelspeicher nach einem der vorhergehenden Ansprüche, **dadurch gekennzeichnet, dass** der Mast (5) einseitig auskragende Auflagestützen (18) aufweist.

9. Kabelspeicher nach einem der vorhergehenden Ansprüche, **dadurch gekennzeichnet, dass** das Untergestell (6, 6') über Querstreben (61) miteinander verbundene Kufen (62) aufweist.

10. Kabelspeicher nach einem der vorhergehenden Ansprüche, **dadurch gekennzeichnet, dass** der Kabelspeicher (1, 1') eine Kabeltrommel (19) aufweist, die separat von dem Mast (5) auf dem Untergestell (6, 6') angeordnet ist.

11. Kabelspeicher nach einem der vorhergehenden Ansprüche, **dadurch gekennzeichnet, dass** an einem Kabelausgang (53) des Mastes (5) wenigstens zwei Führungsrollen (20) angeordnet sind, zwischen welchen das Elektrokabel (4) geklemmt ist, wobei um einen Endabschnitt des Elektrokabels (4) eine Kabelbremshülse (21) angebracht ist.

12. Kabelspeicher nach Anspruch 11, **dadurch gekennzeichnet, dass** die wenigstens zwei Führungsrollen (20) an einem im Winkel zu dem Mast (5) geneigten Montagerahmen (22) montiert sind.
